# EUROPEAN PATENT APPLICATION

(11) **EP 3 879 335 A1**
(43) Date of publication of application: **15.09.2021**
(21) Application number: 21155436.5
(22) Date of filing: 05.02.2021
(51) Int. Cl.: G02C 5/14, G02C 5/22

(54) **EYEGLASSES PROVIDED WITH A REMOVABLE COUPLING DEVICE WITH MAGNETIC EFFECT**

(30) Priority: 09.03.2020 IT 202000005008
(71) Applicant: Biginelli, Ivan, 10090 San Giusto Canavese (TO) (IT)
(72) Inventor: Biginelli, Ivan, 10090 San Giusto Canavese (TO) (IT)
(74) Representative: Notaro, Giancarlo

(57) **Abstract**

Eyeglasses comprising a front (1) with at least one lens (2) and a first and a second temple (3, 4) articulated to the sides of the front (1) by means of respective hinges (5) and rotatable between an extended position, and a folded position against an inner side (10) of the front (1). Each side of the front (1) is connected to the respective temple (3, 4) by means of a removable coupling device with magnetic effect (D).

## Description

### TEXT OF THE DESCRIPTION

### Field of the invention

The present invention relates, in general, to eyeglasses comprising a front with at least one lens, and a first and a second temple articulated to the sides of the front by means of respective hinges, and rotatable between an extended position, wherein they extend substantially perpendicularly to the front, and a folded position against an inner side of the front.

More particularly, the present invention relates to eyeglasses of the type indicated above, provided with a removable coupling device with magnetic effect.

### Prior art

Eyeglasses of the type including a coupling device with magnetic effect, designed to connect the temples to the front in a removable way, have already been proposed in the past, as illustrated, for example, in the documents KR 101819904 B1**,** US 2017/0045754 A1 and KR 102008296 B1

However, the solutions that have been implemented up to now are not fully satisfactory from various points of view, such as structural strength near the joint between the temple and front, simplicity and ease of use, and efficiency of the gripping system between the temple and front. More specifically, the solution described in the document KR 102008296 B1 has limits from the point of view of the stability of the temple-to-front connection, since the temples tend to rotate around the point of connection with the front during normal use.

### Object of the invention

Therefore one object of the invention consists of producing eyeglasses of the type indicated at the beginning of the present description, which are free from breakages in the temple-front junction area, in the event that the temples are subject to significant bending, traction and/or twisting stresses, in any direction.

Another object of the invention is to produce eyeglasses that are simple and functional, and that also have low production and assembly costs.

Another object of the invention is to produce eyeglasses that allow obtaining a stable connection between the temples and the front, during use.

Another object of the invention is to produce eyeglasses that allow the temples to be replaced in a simple and rapid manner.

### Summary of the invention

In view of achieving the aforesaid objects, the present invention relates to eyeglasses having the characteristics indicated in claim 1.

Thanks to the aforesaid characteristics and additional characteristics indicated in the attached claims and in the following description, the eyeglasses according to the present invention achieve all the predetermined objects.

The claims form an integral part of the disclosure provided here in relation to the invention. Note that the present invention is also directed at a retrofit kit according to claim 13.

### Detailed description of a preferred embodiment

Further characteristics and advantages of the invention will become apparent from the description that follows with reference to the attached drawings, provided purely by way of non-limiting example, wherein:
- Figure 1 is a perspective view of a pair of eyeglasses according to a first embodiment of the present invention,
- Figure 2 is an enlarged scale view that illustrates some characteristics of the eyeglasses of the previous Figure, in particular the junction area between a temple and the front;
- Figure 3 is an exploded perspective view of some components illustrated in the previous Figure,
- Figure 4 is a plan view of the components illustrated in Figure 2;
- Figures 5-7 are additional enlarged scale views of the first embodiment of the invention in the case wherein a temple is subjected to a bending stress; and
- Figure 8 is an enlarged scale view of a pair of eyeglasses according to a preferred embodiment of the present invention

In the following description various specific details are illustrated aimed at a thorough understanding of examples of one or more embodiments. The embodiments can be implemented without one or more of the specific details, or with other methods, components, materials, etc. In other cases, known structures, materials, or operations are not shown or described in detail to avoid obscuring various aspects of the embodiments. The reference to "an embodiment" in the context of this description indicates that a particular configuration, structure or characteristic described in relation to the embodiment is included in at least one embodiment. Therefore, phrases such as "in an embodiment", possibly present in different places of this description do not necessarily refer to the same embodiment. Moreover, particular conformations, structures or characteristics can be combined in a suitable manner in one or more embodiments and/or associated with the embodiments in a different way from that illustrated here, for example, a characteristic here exemplified in relation to a figure may be applied to one or more embodiments exemplified in a different figure.

The references illustrated here are only for convenience and do not therefore delimit the field of protection or the scope of the embodiments.

It should be noted that the aesthetic configuration of the eyeglasses exemplified in the Figures must not be considered in any way limiting, but merely representative of one of the many embodiments of eyeglasses intended to incorporate the unique characteristics of the invention. The invention is, therefore, applicable to compact, pocket-sized eyeglasses, both with a pair of lenses (as illustrated in the drawings), and with a single lens (sports or anti-injury eyeglasses). The lenses can be of any type, such as, for example, graduated lenses, lenses treated so as to obtain a reduction in the brightness that passes through them or protective eyeglasses for safety goggles.

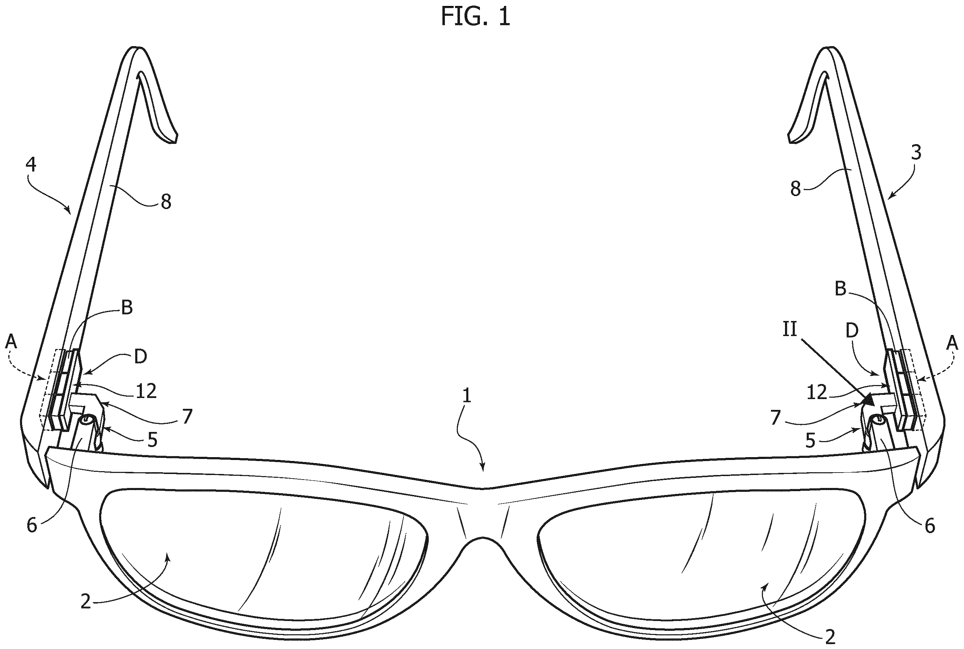

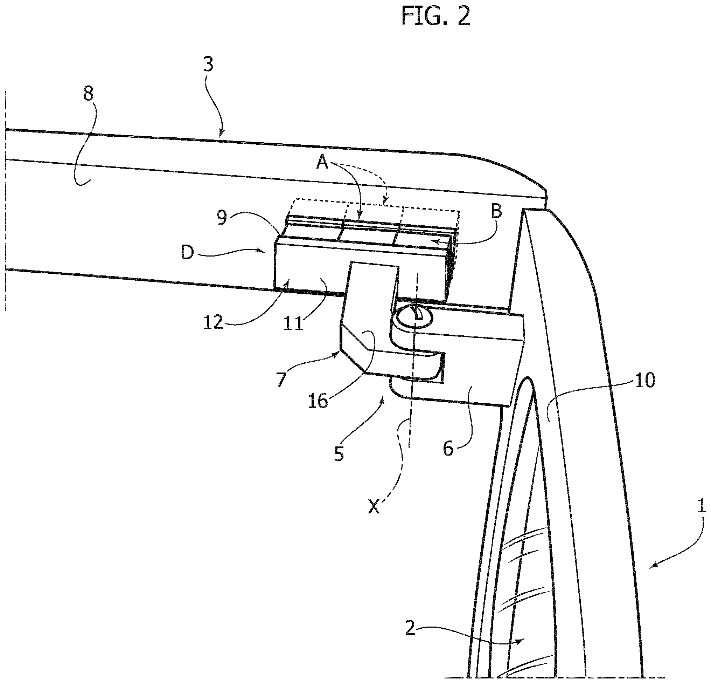

Referring initially to the perspective view of Figure 1, which illustrates a first embodiment of the present invention, the eyeglasses comprise - in a generally known manner - a front 1 carrying a pair of lenses 2 and a pair of temples 3, 4 articulated to the sides of the front 1 by means of respective hinges 5, of which, as indicated in the line II of Figure 1, only the one corresponding to the temple 3 is visible on an enlarged scale in Figures 2-7. In the enlarged scale view of Figure 2, the hinge axis is indicated by the reference X. In the spatial position of the eyeglasses as illustrated in Figures 1, 2, this axis X is oriented vertically.

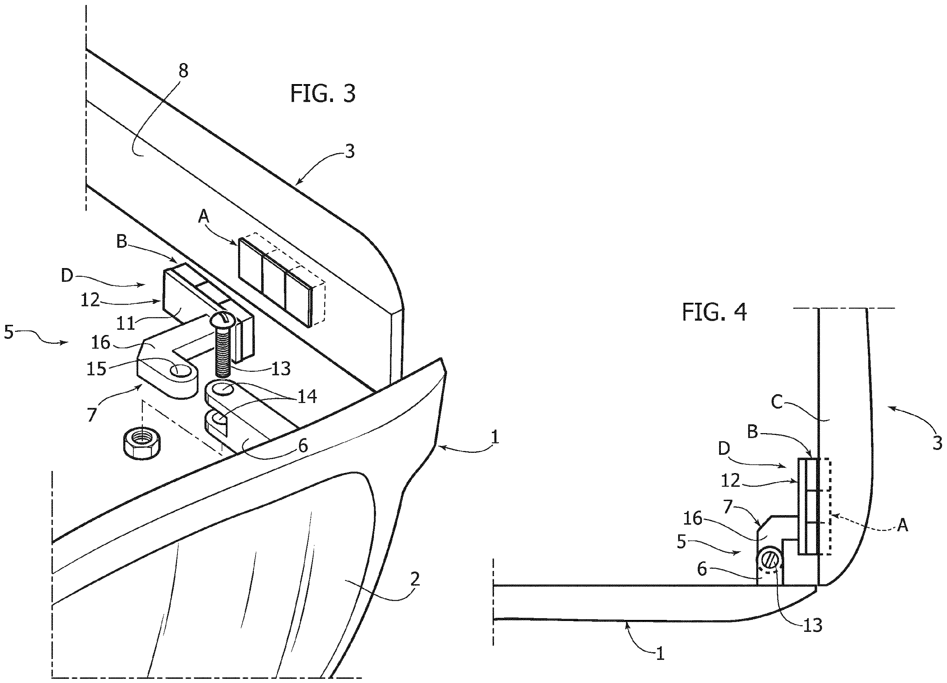

With reference in particular to the perspective view of Figure 2 and the exploded view of Figure 3, each hinge 5 comprises a front-side hinge element 6 and a temple-side hinge element 7 permanently connected in an articulated manner.

According to a first characteristic of the invention, the front-side hinge element 6 is rigidly connected to the front 1 at its inner side 10, particularly at an end area of the front 1. The front-side hinge element 6 protrudes from the inner side 10 of the front 1 substantially along a perpendicular direction with respect to the main plane defined by the front 1. The hinge element 6 may be integrated into the front 1 or, alternatively, glued to the front 1.

In accordance with the embodiment illustrated in the attached drawings, the front-side hinge element 6 is a parallelepiped-shaped body protruding from the inner side 10 of the front 1. In one or more embodiments, the front-side hinge element 6 may have a cylindrical or irregular shape.

The front-side hinge element 6 comprises a fork-shaped portion, intended to receive an end portion of a connecting portion 16 of the temple-side hinge element 7, so as to create the articulated connection of the elements 6, 7. In another embodiment not illustrated in the drawings, the front-side hinge element 6 is a pin protruding from the front 1 having an end connecting portion arranged within the fork-shaped portion of the temple-side hinge element 7.

Whatever the configuration of the connecting portions, the hinge elements 6, 7 may include respective holes 14, 15 (indicated in the exploded view of Figure 3), to allow the articulated connection by means of at least one connecting member 13, in particular a connecting screw. Alternatively, the temple-side hinge element 7 and the front-side hinge element 6 may be mounted in interference with each other, without providing the aforesaid connecting member indicated with the reference 13.

According to a unique characteristic of the invention, the temple-side hinge element 7 is connected to the respective temple 3, 4 by means of a removable magnetic-effect coupling device D.

As shown in particular in the enlarged scale view of Figure 2, the removable magnetic-effect coupling device D comprises a first magnetic coupling element A rigidly connected to the respective temple 3, 4, at its inner side 8. The device D also comprises a second magnetic coupling element B configured to cooperate with the first magnetic element A. The second element B is carried by the temple-side hinge element 7 (Figures 2-4).

In one or more embodiments, as well as in the one illustrated in the drawings, the temple-side hinge element 7 comprises a supporting element 12, which defines a main plane extending perpendicularly to the front 1 and parallelly to the temple 3, 4, in the extended configuration. The support element 12 includes a first face 9 and a second face 11, which are opposite, wherein the second magnetic coupling element B is rigidly connected to the aforesaid first face 9.

It will therefore be appreciated that the temple-side hinge element 7 includes a connecting portion 16 connected to the front-side hinge element 6, and a second portion defining the aforesaid supporting element 12. The connecting portion 16 is connected to the front-side hinge element 6 in the manner previously indicated. Of course, the hinge 5, in particular, the articulated connection and the conformation of the elements 6, 7, may vary widely with respect to what is illustrated.

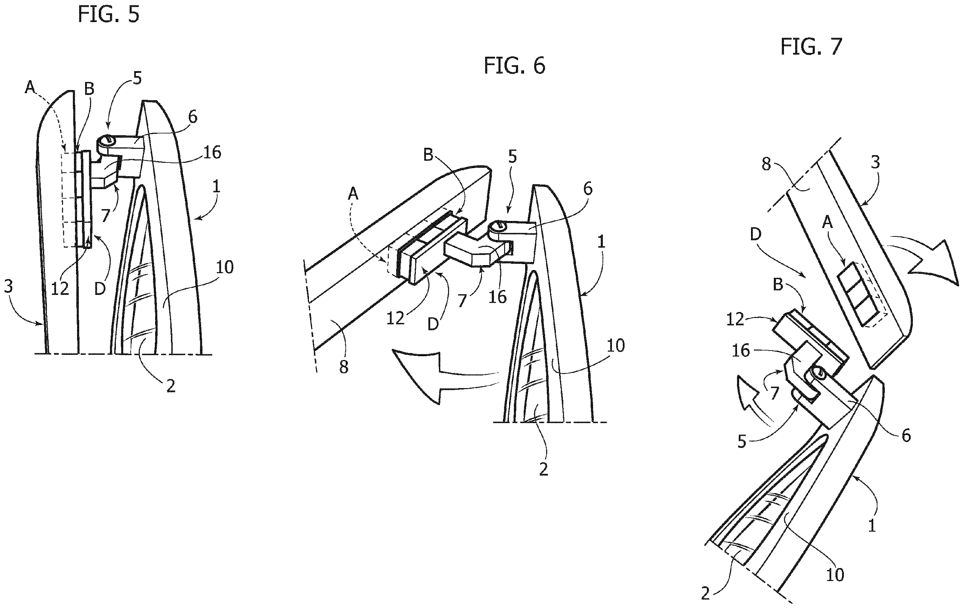

In accordance with the embodiment illustrated in Figures 1-7, the aforesaid connecting portion 16 forms an angle of about 90°, so as to connect the front-side hinge element 6 and the support element 12. However, the aforesaid connecting portion 16 may be made differently from that illustrated, for example, by providing an oblique orientation with respect to the supporting element 12. Precisely with reference to an embodiment with this oblique orientation, advantageously the temples 3, 4, in the bent position against the front 1, will be closer to the front 1 compared to that illustrated in Figure 5.

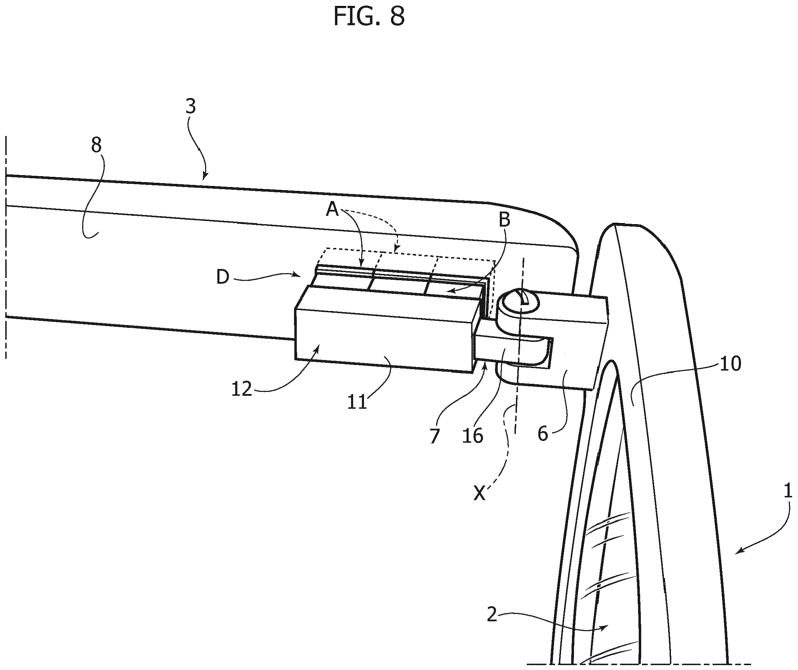

According to a preferred embodiment illustrated in Figure 8, the connecting portion 16 is a straight element having a main axis perpendicular to the front 1, in the configuration of open temples 3,4. The connecting portion 16 may be integrated in a single piece with the supporting element 12 or it can be joined to the supporting element 12 with a structural adhesive.

According to a first embodiment of the invention, the first element A and the second element B are both permanent magnets, with opposite polarities, so as to exert a force of attraction between them. Alternatively, either the first element A or the second element B is made of non-magnetized ferromagnetic material so that it is attracted to the other element consisting of a permanent magnet. Essentially, in order to make the device D effective, it is only necessary that one of the first and second elements A, B is a permanent magnet (using, for example, a neodymium magnet). The intensity of the magnetic force created by the contact of the two elements A, B is calibrated in order to create a stable connection between the temple 3, 4 and the front 1, during the use of the eyeglasses.

According to a further preferred characteristic of the invention illustrated in the drawings, the two magnetic coupling elements A, B are in the shape of a parallelepiped, thus presenting respective flat front surfaces arranged for mutual contact.

According to another preferred characteristic of the invention, said first and second magnetic coupling elements A, B are defined, respectively, by a plurality of side-by-side magnetic elements. With reference to the illustrated embodiment, each magnetic coupling element A, B is defined by a series of three side-by-side magnetic elements. Also thanks to this characteristic, the eyeglasses according to the invention provide a particularly stable connection between the temples 3, 4 and the front 1, during use, preventing the temples 3, 4 from rotating around the connecting area with the front 1. Moreover, thanks to the possibility of modulating the number of adjacent magnetic elements, it is possible to calibrate the magnetic force in an extremely precise way, so as to avoid the temples 3, 4 separating from the front 1 during the maneuver to open the temples 3, 4 in the extended position.

In one or more embodiments as well as in the one illustrated in the drawings, the first magnetic coupling element A is embedded in the body of the temple 3, 4, generally made of plastic material, at a portion of its inner side 8. Alternatively, the first element A may be glued to the inner side 8 of the temple 3, 4 by means of a structural glue. The temple 3, 4 may include a recess portion at its inner side, arranged to accommodate the first magnetic coupling element A. Similarly, the second magnetic coupling element B may also be rigidly connected to the supporting element 12 as indicated above for the element B, or alternatively by mechanical retention means.

In one or more embodiments of the invention, the entire magnetic coupling device D, including elements A, B, are coated with a layer of polymeric material (for example, of polytetrafluoroethylene). Thanks to this characteristic, the structural duration of the magnet is considerably increased compared to the case wherein the elements A, B are arranged outside, without particular protections.

Thanks to the arrangement of the removable magnetic-effect coupling device D, in particular, of the two magnetic coupling elements A, B in the positions described above, the removable coupling between the temples 3, 4 and the front 1 is achieved only due to a magnetic force between the first and second magnetic coupling elements A, B, without the aid of further constraining elements (such as, for example, portions of the temple and/or front that help the union with male-female mechanism), which could cause the breakage of the eyeglasses following stresses of vertical bending and/or twisting of the temples. Furthermore, the production of the device D according to the previously indicated characteristics, allows a stable coupling between the temples 3, 4 and the front 1 to be created, and at the same time allows separation of the temples 3, 4 from the front 1 when the temples are subject to significant stresses in any direction.

Thanks to the structure described above, the eyeglasses according to the invention implement an effective coupling between the temples 3, 4 and the front 1 without the aid of other elements aside from the magnetic coupling elements A, B. At the same time, the magnetic force developed by the device D is not excessive so as to allow detachment of the temples from the front, in the case of significant stresses in any direction.

Figures 5-7 are enlarged scale views showing the junction area between the temple 3 and the front 1, in the case wherein the temple 3 is bent in an outward direction, opposite to the inward direction of bending against the front 1. Thanks to the previously described characteristics of the hinge associated with the magnetic coupling device D, the temple 3 is configured to separate from the front 1, without causing structural anomalies in the temple-front junction area.

In general, it should be noted that the eyeglasses according to the invention, in accordance with the previously indicated characteristics, in place of bending/ traction/ torsion of one of the temples towards any direction, are exempt from structural abnormalities, such as the breaking of the temple-side hinge element 7. Unlike eyeglasses made according to the conventional technique, and in accordance with what is described, for example, in the document KR 101819904 B1**,** the temples separate from the front, without breaking the eyeglasses, even in the case of bending upwards or downward, i.e. along a direction substantially perpendicular to the direction of bending illustrated in Figure 7.

In one or more embodiments of the invention, the temple-side hinge element 7 (and the supporting element 12) are made of metal material, so as to maximize the conduction of the magnetic effect produced by the elements A, B, as well as improving the structural duration of the front-side hinge element 6.

In one or more embodiments of the invention, the eyeglasses include a hearing aid and/or an anti-sleep alarm device integrated in the temples 3, 4 or in the front 1.

As can be seen from the above description, the eyeglasses according to the invention, therefore, have a series of undoubted advantages, in particular:
- the eyeglasses are free from breakages in the temple/front junction area, in the event wherein the temples are subjected to significant bending stresses in any direction;
- the eyeglasses are simple and functional and also have low production and assembly costs;
- the eyeglasses allow a stable connection to be obtained between the temples and the front, during use; and
- the eyeglasses allow replacement of the temples quickly and easily.

Of course, without prejudice to the principle of the invention, the details of construction and the embodiments may vary widely with respect to those described and illustrated purely by way of example, without departing from the scope of the present invention.

## Claims

1. Eyeglasses comprising a front (1) with at least one lens (2) and a first and a second temple (3, 4) articulated to the sides of the front (1) by means of respective hinges (5) and rotatable between an extended position, wherein they extend substantially perpendicularly to the front (1), and a folded position against an inner side (10) of the front (1).
- wherein each side of the front (1) is connected to the respective temple (3, 4) by means of a removable magnetic-effect coupling device (D) comprising a first magnetic coupling element (A) and a second magnetic coupling element (B) configured to cooperate with said first magnetic coupling element (A), the magnetic coupling elements (A, B) having respective surfaces arranged for mutual contact,
the eyeglasses being **characterized in that**:
- the mutual contact between the magnetic coupling elements (A, B) is made at an inner side (8) of the respective temple (3, 4),
- in such a way that a particularly stable connection is made between the front (1) and the temple (3, 4), without causing structural damage to the eyeglasses following a bending or traction or torsion stress of the temples (3, 4).

2. Eyeglasses according to claim 1, **characterized in that** each hinge (5) comprises a front-side hinge element (6) and a temple-side hinge element (7) permanently connected in an articulated manner to each other, wherein the front-side hinge element (6) is an element rigidly connected to the front (1) and protruding from said inner side (10) of the front (1).

3. Eyeglasses according to claim 2, **characterized in that** said temple-side hinge element (7) comprises:
- a connecting portion (16) permanently connected in an articulated way to the front-side hinge element (6),
- a supporting element (12) arranged at one end of the connecting portion (16),
- said second magnetic coupling element (B) being carried by said supporting element (12),
- in such a way that said second magnetic coupling element (B) is not directly mounted on the front (1).

4. Eyeglasses according to claim 3, **characterized in that** said first magnetic coupling element (A) is rigidly connected to the temple (3,4) at said inner side (8).

5. Eyeglasses according to claim 1, **characterized in that** the coupling between the temples (3, 4) and the front (1) is achieved only due to a magnetic force exerted between the first and the second magnetic coupling element (A, B), without the aid of further constraining elements, in such a way that the temples (3, 4) can be separated from the front (1) following said stress.

6. Eyeglasses according to claim 3, **characterized in that** said supporting element (12) defines a main plane extending perpendicularly to the temples (3, 4) in the extended configuration, said support element (12) including a first and a second opposite face (9, 11), said second magnetic coupling element (B) being rigidly connected to said first face (9).

7. Eyeglasses according to any one of the preceding claims, **characterized in that** the magnetic coupling elements (A, B), are coated with a layer of polymeric material, in such a way that the duration of the magnetic adsorption force is significantly increased compared to the case wherein said elements (A, B) are exposed to the outside, without particular protections.

8. Eyeglasses according to claim 2, **characterized in that** the temple-side hinge element (7) is made of metal material, so as to increase the conduction of the magnetic effect created by the elements of the device (D).

9. Eyeglasses according to any one of the preceding claims, **characterized in that** said first and second magnetic coupling elements (A, B) are parallelepiped-shaped, having respective flat front surfaces arranged for mutual contact.

10. Eyeglasses according to any one of the preceding claims, **characterized in that** said first and second magnetic coupling elements (A, B) are, respectively, defined by a plurality of side-by-side magnetic elements.

11. Eyeglasses according to claim 1, **characterized in that** at least one of said first and second magnetic coupling elements (A, B) is a permanent magnet.

12. Eyeglasses according to any one of the preceding claims, **characterized in that** said first and second magnetic coupling elements (A, B) are both permanent magnets.

13. Eyeglasses according to any one of the preceding claims, **characterized in that** they comprise an integrated hearing aid and/or an anti-sleep alarm device.

14. A retrofit kit comprising a pair of temples (3,4) and respective temple-side hinge elements (7) comprising a removable coupling device with magnetic effect (D), designed to create a pair of eyeglasses according to any one of claims 1-13.
